# EUROPÄISCHE PATENTSCHRIFT

(11) **EP 3 028 900 B1**
(45) Veröffentlichungstag und Bekanntmachung des Hinweises auf die Patenterteilung: **20.12.2017**
(21) Anmeldenummer: 15187260.3
(22) Anmeldetag: 29.09.2015
(51) Int. Cl.: B60R 1/07

(54) **AUSSENSPIEGELERSATZSYSTEM**
OUTSIDE MIRROR REPLACEMENT SYSTEM
SYSTÈME DE REMPLACEMENT DE RÉTROVISEUR EXTÉRIEUR

(30) Priorität: 01.12.2014 DE 102014224493
(43) Veröffentlichungstag der Anmeldung: 08.06.2016
(73) Patentinhaber: ROBERT BOSCH GMBH, 70442 Stuttgart (DE)
(72) Erfinder: Prenzel, Ralf, 31141 Hildesheim (DE); Selem, Moez, 30625 Hannover (DE)

(56) Entgegenhaltungen:
- DE-A1-102012 216 752

## Beschreibung

### Stand der Technik

Die vorliegende Erfindung betrifft ein Außenspiegelersatzsystem für ein Fahrzeug mit mindestens einer Kamera und mit mindestens einer in einem Innenraum des Fahrzeuges angeordneten Anzeigeeinrichtung, welche mit der Kamera verbunden ist und ein von der Kamera aufgenommenes Bild anzeigt. DE102012216752 A1 offenbart einen Außenspiegelersatzsystem gemäß den Oberbegriffen der Ansprüche 1 und 2. Es ist bekannt, bei Fahrzeugen, insbesondere bei Nutzfahrzeugen, wie Lastkraftfahrzeugen, die Außenspiegel zumindest teilweise durch eine oder mehrere Kameras und eine oder mehrere in dem Innenraum des Fahrzeuges angeordnete Anzeigeeinrichtungen, wie beispielsweise Bildschirme oder Displays, die das rückwärts gerichtete Bild, insbesondere in Form eines Videobildes, der oder die Kameras darstellen, zu ersetzen, um die Aerodynamik des Fahrzeuges, insbesondere in Bezug auf den Luftwiderstand des Fahrzeuges, zu verbessern. Ein derartiges Außenspiegelersatzsystem ist beispielsweise in der DE 199 513 76 A1, DE 10 2011 010 624 A1 und DE 10 2013 001 835 A1 beschrieben.

Insbesondere bei Lastkraftfahrzeugen ist der Ersatz der Außenspiegel durch ein solches System sinnvoll, da aufgrund der großen Außenspiegel der Luftwiderstand der Fahrzeuge hier besonders stark erhöht ist, welcher durch den Einsatz von Kameras und in dem Innenraum angeordneten Anzeigeeinrichtungen wesentlich reduziert werden kann. Somit wird die bildliche Darstellung der Außenspiegel durch eine bildliche Darstellung auf einer Anzeigeeinrichtung oder aber auch auf zwei Anzeigeeinrichtungen je eine links und rechts, in dem Innenraum bzw. der Fahrerkabine eines Lastkraftwagens ersetzt, die das von den verschiedenen Kameras aufgezeichnete Bild bzw. Videosignal sinnvoll darstellen können.

Eine gestellte Aufgabe ist es nun bei einem Außenspiegelersatzsystem die Darstellung des auf der Anzeigeeinrichtung dargestellten Bildes weiter zu verbessern.

Offenbarung der Erfindung Vor diesem Hintergrund wird mit der vorliegenden Erfindung ein Außenspiegelersatzsystem gemäß den Ansprüchen 1 und 2 vorgestellt. Zweckmäßige Ausgestaltungen und vorteilhafte Weiterbildungen der Erfindung sind in den Unteransprüchen angegeben.

Die vorliegende Erfindung zeichnet sich insbesondere dadurch aus, dass das Außenspiegelersatzsystem einen Umfelderfassungssensor zur Detektion eines sich außerhalb des Fahrzeuges befindenden Objektes aufweist, wobei das detektierte Objekt auf der Anzeigeeinrichtung hervorgehoben anzeigbar ist. Das Außenspiegelersatzsystem in den Ansprüchen 1 und 2 offenbart eine für den Fahrer des Fahrzeuges verbesserte Darstellung eines Bildes auf einer Anzeigeeinrichtung eines Außenspiegelersatzsystems durch eine Regelung der Helligkeit des dargestellten Bildes in Abhängigkeit der Fahrtrichtung und in Abhängigkeit der Geschwindigkeit des Fahrzeuges aus.

Während einer Vorwärtsfahrt des Fahrzeuges ist es vorteilhaft, wenn die Helligkeit einer Anzeigeeinrichtung, die im Innenraum des Fahrzeuges die Außenspiegel bzw. Rückspiegel ersetzen soll, nicht zu hoch ist, damit der Fahrer des Fahrzeuges nicht durch die Anzeigeeinrichtung geblendet wird. Dabei zu berücksichtigen sind auch Spiegeleffekte an den Außenfenstern des Fahrzeuges, insbesondere an der Windschutzscheibe des Fahrzeuges, welche insbesondere bei einer hohen Helligkeit des auf der Anzeigeeinrichtung dargestellten Bildes auftreten können. Bei Fahrten in der Dunkelheit können diese Spiegeleffekte besonders stark auftreten. Fährt das Fahrzeug rückwärts, konzentriert sich der Fahrer wesentlich mehr auf die Anzeigeeinrichtung des Außenspiegelersatzsystems als bei einer Vorwärtsfahrt des Fahrzeuges, da bei einer Vorwärtsfahrt das auf den Außenspiegeln und damit auf der Anzeigeeinrichtung dargestellte Bild nur eine geringere Bedeutung für den Fahrer hat. Ist die Darstellung des Bildes bzw. der Bilder auf der Anzeigeeinrichtung beim Rückwärtsfahren zu schwach, kann es insbesondere bei Nachtfahrten vorkommen, dass wichtige Objekte außerhalb des Fahrzeuges nicht auf der Anzeigeeinrichtung für den Fahrer erkennbar sind, so dass der Fahrer eventuell jemanden oder etwas übersehen kann, wodurch die Unfallgefahr erhöht wird. Dadurch, dass nunmehr die Helligkeit des auf der Anzeigeeinrichtung dargestellten Bildes bei einem Wechsel von einer Vorwärtsfahrbewegung zu einer Rückwärtsfahrbewegung des Fahrzeuges durch eine vorzugsweise automatische Regelung erhöht wird, ist es möglich, dass der Fahrer beim Rückwärtsfahren die Umgebung außerhalb des Fahrzeuges und damit auch wichtige Objekte außerhalb des Fahrzeuges besser und schneller auf der Anzeigeeinrichtung erkennen kann. Der Fahrer wird sich beim Rückwärtsfahren auf die Anzeigeeinrichtung des Außenspiegelersatzsystems konzentrieren, so dass sich eventuelle Spiegelungen der Bilder an der Windschutzscheibe beim Rückwärtsfahren nicht störend oder gefährdend auswirken, wie dies hingegen bei einer Vorwärtsfahrbewegung des Fahrzeuges der Fall sein kann. Durch die erhöhte Helligkeit der Bilder auf der Anzeigeeinrichtung beim Rückwärtsfahren des Fahrzeuegs können auch besonders dunkle Objekte bzw. Hindernisse von dem Fahrer besser und schneller erkannt werden, so dass Unfälle besser vermieden werden können.

Alternativ zur Fahrtrichtung des Fahrzeuges kann die Helligkeit des auf der Anzeigeeinrichtung dargestellten Bildes in Abhängigkeit einer Grenzgeschwindigkeit des Fahrzeuges regelbar sein. Ist die Geschwindigkeit des Fahrzeuges unterhalb dieser Grenzgeschwindigkeit, ist die Helligkeit des auf der Anzeigeeinrichtung dargestellten Bildes vorzugsweise unabhängig von der Fahrtrichtung des Fahrzeuges heller als bei einer Geschwindigkeit des Fahrzeuges oberhalb dieser Grenzgeschwindigkeit. Als Grenzgeschwindigkeit kann beispielsweise eine Geschwindigkeit des Fahrzeuges von 20 km/h definiert sein.

Bevorzugt kann zur Regelung der Helligkeit des auf der Anzeigeeinrichtung angezeigten Bildes eine Änderung der Einstellungen der Anzeigeeinrichtung und/oder eine Änderung der Bildeigenschaften des auf der Anzeigeeinrichtung angezeigten Bildes einstellbar sein. Beispielsweise kann zum Erreichen einer höheren Helligkeit des Bildes auf der Anzeigeeinrichtung bei der Rückwärtsfahrbewegung eine Bildeigenschaft, beispielsweise der Helligkeitsgrad des angezeigten Bildes, entsprechend verändert werden oder aber es können auch zwei oder mehr als zwei Bildeigenschaften gleichzeitig entsprechend verändert werden.

Weiter bevorzugt ist es vorgesehen, dass zur Regelung der Helligkeit des auf der Anzeigeeinrichtung angezeigten Bildes zwischen der mindestens einen Kamera und der mindestens einen Anzeigeeinrichtung mindestens eine Steuereinheit zwischengeschaltet ist. Mittels einer oder mehreren Steuereinheiten kann die Anzeige des Bildes auf der Anzeigeeinrichtung zur Erhöhung der Helligkeit des angezeigten Bildes entsprechend gesteuert werden, so dass eine optimale Darstellung der von den Kameras aufgezeichneten Bilder auf der Anzeigeeinrichtung ermöglicht werden kann.

Dabei ist es auch möglich, dass eine Steuerung auf einer weiteren oder anderen Steuereinheiten integriert werden kann.

Weiter ist es bevorzugt vorgesehen, dass das Außenspiegelersatzsystem einen Fahrzeugdatensensor zur Detektion eines eingelegten Ganges und/oder einer Geschwindigkeit des Fahrzeuges aufweist. Der Fahrzeugdatensensor kann dem Außenspiegelersatzsystem Fahrzeuginformationen, beispielsweise welcher Gang eingelegt ist und/oder die aktuelle Geschwindigkeit des Fahrzeuges, übermitteln. Die Daten können beispielsweise über einen im Fahrzeug verbauten CAN-Bus ermittelt und an die Steuereinheit weitergegeben werden. Hierfür kann die Steuereinheit zusätzlich die Helligkeit der Anzeigeeinrichtung bei eingelegtem Rückwärtsgang bzw. bei einer rückwärts gerichteten Geschwindigkeit des Fahrzeuges entsprechend anpassen.

Alternativ zu der Detektion eines eingelegten Ganges und/oder einer Geschwindigkeit des Fahrzeuges kann der Fahrzeugdatensensor beispielsweise auch eine Geschwindigkeitsgrenze, die vorher definiert wurde, erfassen, so dass bei Erreichen einer bestimmten Geschwindigkeitsgrenze die Helligkeit der Anzeigeeinrichtung bzw. des auf der Anzeigeeinrichtung angezeigten Bildes entsprechend geregelt und damit angepasst werden kann.

Weiter ist es bevorzugt vorgesehen sein, dass das Außenspiegelersatzsystem einen Beschleunigungssensor aufweist. Der Beschleunigungssensor kann die Richtung der Beschleunigung und damit die Bewegungsrichtung des Fahrzeuges messen. Der Beschleunigungssensor kann als zusätzlicher Sensor unmittelbar mit der Steuereinheit verbunden vorgesehen sein. Alternativ kann der Beschleunigungssensor auch in den Fahrzeugdatensensor integriert sein.

Weiter ist es bevorzugt vorgesehen, dass das Außenspiegelersatzsystem einen Helligkeitssensor zur Detektion eines Helligkeitsgrades außerhalb des Fahrzeuges aufweist. Mittels des Helligkeitssensors kann somit die Außenhelligkeit und somit die Helligkeit der Umgebung außerhalb des Fahrzeuges bestimmt werden, wobei die dabei erfassten Daten von dem Helligkeitssensor beispielsweise an die Steuereinheit weitergeleitet werden können, so dass die Helligkeit der Anzeigeeinrichtung in Abhängigkeit der Außenhelligkeit und somit des Helligkeitsgrades außerhalb des Fahrzeuges gesteuert bzw. geregelt werden kann. Ist beispielsweise die Helligkeit der Umgebung tagsüber hoch, kann auch die Helligkeit des auf der Anzeigeeinrichtung dargestellten Bildes höher sein. Je geringer jedoch die Helligkeit der Umgebung außerhalb des Fahrzeuges ist, desto geringer kann die Helligkeit des auf der Anzeigeeinrichtung dargestellten Bildes sein.

Zur Regelung der Helligkeit ist es weiter bevorzugt vorgesehen, dass ein Helligkeitsgrad, ein Kontrastgrad, ein Farbtiefengrad und/oder ein Farbsättigungsgrad des auf der Anzeigeeinrichtung angezeigten Bildes einstellbar ist. Durch die Einstellung einer oder mehrerer dieser Bildeigenschaften kann die Helligkeit des auf der Anzeigeeinrichtung dargestellten Bildes erhöht werden, um dem Fahrer eine bessere und schnellere Möglichkeit des Erkennens von beispielsweise sich außerhalb des Fahrzeuges befindenden Objekten bzw. Hindernissen zu ermöglichen.

Um außerhalb des Fahrzeuges sich befindende Objekte besser detektieren zu können, ist es erfindungsgemäß vorgesehen, dass das Außenspiegelersatzsystem einen Umfelderfassungssensor aufweist, welcher Informationen von außerhalb des Fahrzeuges an beispielsweise die Steuereinheit weitergeben kann. Ein Umfelderfassungssensor kann beispielsweise ein ultraschallbasierter Abstandssensor oder ein Radar sein. Informationen, die durch den Umfelderfassungssensor ermittelt werden, können dazu dienen, dass erkannte, sich außerhalb des Fahrzeuges befindende Objekte besonders hervorgehoben auf der Anzeigeeinrichtung dargestellt werden können.

Somit ist es erfindungsgemäß vorgesehen, dass das detektierte Objekt auf der Anzeigeeinrichtung hervorgehoben anzeigbar ist. Die hervorgehobene Darstellung kann beispielsweise durch besondere Anpassung der Bildparameter in dem entsprechenden Bildbereich oder beispielsweise auch durch eine andersfarbige und/oder umrandete Darstellung des detektierten Objektes auf der Anzeigeeinrichtung erfolgen, so dass derartige detektierte Objekte für den Fahrer auf der Anzeigeeinrichtung besondere schnell und gut erkennbar sein können.

Die Kamera kann ferner derart ausgebildet sein, dass diese auf das detektierte Objekt ausrichtbar ist, um diese besonders gut erfassen zu können und auf der Anzeigeeinrichtung für den Fahrer besonderes schnell erkennbar darstellen zu können.

Bevorzugt ist es weiter vorgesehen, dass die Helligkeit des auf der Anzeigeeinrichtung angezeigten Bildes derart geregelt ist, dass bei einer auf eine Rückwärtsfahrbewegung folgende Vorwärtsfahrbewegung des Fahrzeuges die Helligkeit des auf der Anzeigeeinrichtung dargestellten Bildes zeitverzögert reduzierbar ist. Beim Rangieren eines Nutzfahrzeuges wird oftmals mehrfach zwischen einer Rückwärtsfahrbewegung und einer Vorwärtsfahrbewegung des Fahrzeuges gewechselt. Wird die Helligkeit des auf der Anzeigeeinrichtung dargestellten Bildes nur bei einer Rückwärtsfahrbewegung erhöht und bei einer Vorwärtsfahrbewegung wieder zurückgestellt, kann dies den Fahrer des Fahrzeuges irritieren. Um dies zu vermeiden, ist eine bevorzugte Ausgestaltung, dass bei einer auf eine Rückwärtsfahrbewegung folgende Vorwärtsfahrbewegung des Fahrzeuges die Helligkeit des auf der Anzeigeeinrichtung dargestellten Bildes nicht sofort wieder zurückgestellt wird, sondern zeitverzögert reduziert wird. Die Länge der Zeitverzögerung kann über einen vordefinierten Zeitraum eingestellt sein.

Alternativ oder zusätzlich kann ferner die Helligkeit des auf der Anzeigeeinrichtung dargestellten Bildes in Form einer Hysteresis regelbar sein. Während beim Einlegen des Rückwärtsganges die Helligkeit innerhalb kurzer Zeit erhöht wird, wird nach dem Rückwärtsfahren die Helligkeit in einer bestimmten Zeit langsamer reduziert, um den Fahrer beim Rangieren des Fahrzeuges nicht zu stark durch ständige Helligkeitsänderungen der Anzeigeeinrichtung zu irritieren.

Alternativ oder zusätzlich kann die Helligkeit des auf der Anzeigeeinrichtung dargestellten Bildes in Form einer Hysteresis in Abhängigkeit der Grenzgeschwindigkeit des Fahrzeuges regelbar sein.

Weiter ist es bevorzugt vorgesehen, dass die Helligkeit des auf der Anzeigeeinrichtung dargestellten Bildes derart regelbar ist, dass in einem oder mehreren Teilbereichen der Anzeigeeinrichtung die Helligkeit unterschiedlich hoch einstellbar ist. Somit kann es möglich sein, die Erhöhung der Helligkeit nur in einem Teilbereich der Anzeigeeinrichtung vorzusehen, um zum Beispiel einen Bereich, der sehr weit abseits der Fahrtrichtung liegt, so in der Helligkeit zu lassen, wie er vorher war, und nur den direkten Bereich hinter dem Fahrzeug besser abzubilden, da dieser Bereich für den Fahrer beim Rückwärtsfahren wichtiger zu erkennen sein kann.

Die Lösung der erfindungsgemäßen Aufgabe erfolgt ferner mit einem Fahrzeug, welches ein wie vorstehend beschrieben, aus- und weitergebildetes Außenspiegelersatzsystem aufweist.

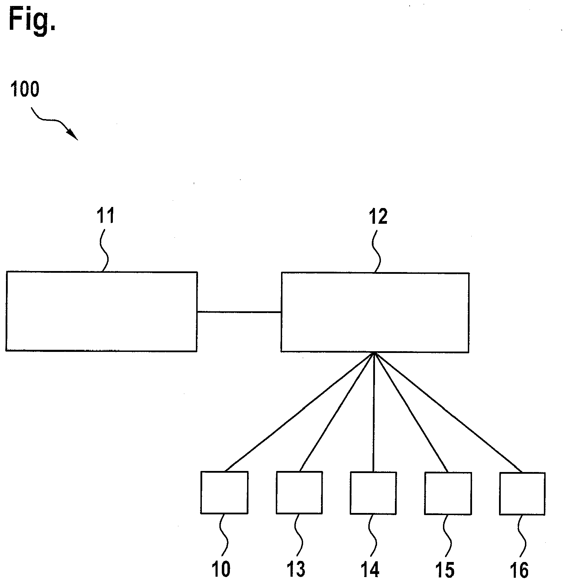

Weitere die Erfindung verbessernde Maßnahmen werden nachstehend gemeinsam mit der Beschreibung eines bevorzugten Ausführungsbeispiels der Erfindung anhand der einzigen Figur näher dargestellt.

Die einzige Figur zeigt ein Außenspiegelersatzsystem 100 mit einer an einer Außenseite eines Fahrzeuges angeordneten, entgegen einer Vorwärtsfahrtrichtung des Fahrzeuges gerichteten Kamera 10 und mit einer in einem Innenraum des Fahrzeuges angeordneten Anzeigeeinrichtung 11, welche über eine Steuereinheit 12 mit der Kamera 10 verbunden ist, so dass das bzw. die von der Kamera 10 aufgenommenen Bilder, insbesondere Videobilder, von der Steuereinheit 12 verarbeitet werden können und von der Steuereinheit 12 an die Anzeigeeinrichtung 11 weitergeleitet werden können, so dass das bzw. die Bilder von der Kamera 10 erfassten Bilder auf der Anzeigeeinrichtung 11 für einen Fahrer angezeigt werden können.

Dabei kann das Außenspiegelersatzsystem 100 auch zwei oder mehr Kameras 10 und/oder zwei oder mehr Anzeigeeinrichtungen 11 umfassen.

Zusätzlich zu der Kamera 10 ist die Steuereinheit 12 bei der hier gezeigten Ausgestaltung mit einem Helligkeitssensor 13, welcher die außerhalb des Fahrzeuges vorherrschende Helligkeit detektiert und die detektierten Daten an die Steuereinheit 12 weitergibt, mit einem Fahrzeugdatensensor 14, welcher Informationen des Fahrzeuges, wie beispielsweise der aktuell eingelegte Gang und/oder die Geschwindigkeit des Fahrzeuges, erfasst und an die Steuereinheit 12 weitergibt, sowie mit einem Umfelderfassungssensor 15, welcher außerhalb des Fahrzeuges sich befindende Objekte detektiert und diese Informationen an die Steuereinheit 12 weitergibt, um diese Objekte in einer besonderen Art, insbesondere durch Hervorhebungen, gezielt auf der Anzeigeeinrichtung 11 darstellen zu können, so dass der Fahrer auf diese Objekte gesondert hingewiesen werden kann, verbunden.

Ein derartig ausgebildetes Außenspiegelersatzsystem 100 kann beispielsweise derart eingesetzt werden, dass bei einer Vorwärtsfahrbewegung des Fahrzeuges, das heißt wenn kein Rückwärtsgang eingelegt ist oder die aktuelle Geschwindigkeit des Fahrzeuges nicht negativ ist, die Helligkeit des auf der Anzeigeeinrichtung 11 angezeigten Bildes derart von der Steuereinheit 12 gesteuert ist, dass der Helligkeitsgrad des Bildes in Abhängigkeit der Außenhelligkeit außerhalb des Fahrzeuges optimal für eine Vorwärtsfahrt geeignet ist und damit der Helligkeitsgrad reduziert ist, um den Fahrer nicht durch das auf der Anzeigeeinrichtung 11 angezeigte Bild zu stören oder Spiegeleffekte beispielsweise auf der Windschutzscheibe hervorzurufen. Wird nun die Fahrtrichtung des Fahrzeuges geändert, so dass dieses nun rückwärts fährt, beispielsweise wenn der Rückwärtsgang eingelegt wird bzw. wenn die Geschwindigkeit des Fahrzeuges negativ wird, kann die Helligkeit des auf der Anzeigeeinrichtung 11 angezeigten Bildes derart von der Steuereinheit 12 gesteuert werden, dass sich die Helligkeit des auf der Anzeigeeinrichtung 11 angezeigten Bildes erhöht bzw. derart erhöht, dass die Helligkeit des Bildes höher ist als die optimale Einstellung des Helligkeisgrades in Abhängigkeit der Außenhelligkeit für eine Vorwärtsfahrbewegung des Fahrzeuges.

Die Helligkeit des auf der Anzeigeeinrichtung 11 angezeigten Bildes ist auch bei einer Rückwärtsfahrbewegung des Fahrzeuges derart gewählt bzw. durch die Steuereinheit 12 geregelt, dass der Fahrer nicht geblendet wird, aber trotzdem alle notwendigen Objekte der Umgebung auf der Anzeigeeinrichtung 11 für den Fahrer gut und schnell erkennbar sind. Besondere Objekte, welche Hindernisse beim Rückwärtsfahren des Fahrzeuges darstellen, werden von dem Umfelderfassungssensor 15 detektiert und an die Steuereinheit 12 weitergegeben, um diese detektierten Objekte auf der Anzeigeeinrichtung 11 für den Fahrer besonders gut sichtbar darstellen zu können, beispielsweise indem diese Objekte durch eine Umrandung hervorgehoben sind und/oder durch eine andersfarbige Darstellung hervorgehoben sind und/oder der Helligkeitsgrad dieser Objekte noch einmal höher ist als gegenüber der restlichen auf der Anzeigeeinrichtung 11 dargestellten Umgebung.

Werden beispielsweise auf der Anzeigeeinrichtung 11 auch Warnhinweise dargestellt, wie beispielsweise eine Durchfahrtsbeschränkung, kann es ebenfalls von der Steuereinheit 12 derart gesteuert sein, dass diese Warnhinweise bei einer Rückwärtsfahrbewegung des Fahrzeuges heller dargestellt werden, so dass auch diese Warnhinweise für den Fahrer besser sichtbar sind.

Zusätzlich zu der Erhöhung des Helligkeitsgrades des auf der Anzeigeeinrichtung 11 angezeigten Bildes bei einer Rückwärtsfahrbewegung des Fahrzeuges kann beispielsweise auch der Kontrastgrad, der Farbtiefengrad und/oder der Farbsättigungsgrad bzw. die Schärfe des auf der Anzeigeeinrichtung 11 dargestellten Bildes für eine besonders gute Darstellung für den Fahrer mittels der Steuereinheit 12 entsprechend angepasst werden.

## Patentansprüche

1. Außenspiegelersatzsystem (100) für ein Fahrzeug, mit mindestens einer Kamera (10) und mit mindestens einer in einem Innenraum des Fahrzeuges angeordneten Anzeigeeinrichtung (11), welche mit der Kamera (10) verbunden ist und ein von der Kamera (10) aufgenommenes Bild anzeigt, wobei die Helligkeit des auf der Anzeigeeinrichtung (11) angezeigten Bildes in Abhängigkeit der Fahrtrichtung des Fahrzeuges derart geregelt ist, dass bei einer Rückwärtsfahrbewegung des Fahrzeuges das auf der Anzeigeeinrichtung (11) angezeigte Bild gegenüber einer Vorwärtsfahrbewegung des Fahrzeuges in einer größeren Helligkeit dargestellt ist,
**dadurch gekennzeichnet, dass**
das Außenspiegelersatzsystem (100) einen Umfelderfassungssensor (15) zur Detektion eines sich außerhalb des Fahrzeuges befindenden Objektes aufweist, wobei das detektierte Objekt auf der Anzeigeeinrichtung (11) hervorgehoben anzeigbar ist.

2. Außenspiegelersatzsystem (100) für ein Fahrzeug, mit mindestens einer Kamera (10) und mit mindestens einer in einem Innenraum des Fahrzeuges angeordneten Anzeigeeinrichtung (11), welche mit der Kamera (10) verbunden ist und ein von der Kamera (10) aufgenommenes Bild anzeigt,
**dadurch gekennzeichnet, dass**
die Helligkeit des auf der Anzeigeeinrichtung (11) angezeigten Bildes in Abhängigkeit einer Grenzgeschwindigkeit des Fahrzeuges derart geregelt ist, dass bei einer Unterschreitung der Grenzgeschwindigkeit des Fahrzeuges das auf der Anzeigeeinrichtung (11) angezeigte Bild in einer größeren Helligkeit als bei einer Überschreitung der Grenzgeschwindigkeit dargestellt ist, wobei das Außenspiegelersatzsystem (100) einen Umfelderfassungssensor (15) zur Detektion eines sich außerhalb des Fahrzeuges befindenden Objektes aufweist, wobei das detektierte Objekt auf der Anzeigeeinrichtung (11) hervorgehoben anzeigbar ist.

3. Außenspiegelersatzsystem (100) nach Anspruch 1 oder 2, **dadurch gekennzeichnet, dass** zur Regelung der Helligkeit des auf der Anzeigeeinrichtung (11) angezeigten Bildes eine Änderung der Einstellungen der Anzeigeeinrichtung (11) und/oder eine Änderung der Bildeigenschaften des auf der Anzeigeeinrichtung (11) angezeigten Bildes einstellbar ist.

4. Außenspiegelersatzsystem (100) nach einem der Ansprüche 1 bis 3, **dadurch gekennzeichnet, dass** zur Regelung der Helligkeit des auf der Anzeigeeinrichtung (11) angezeigten Bildes zwischen der mindestens einen Kamera (10) und der mindestens einen Anzeigeeinrichtung (11) mindestens eine Steuereinheit (12) zwischengeschaltet ist.

5. Außenspiegelersatzsystem (100) nach einem der Ansprüche 1 bis 4, **dadurch gekennzeichnet, dass** das Außenspiegelersatzsystem (100) einen Fahrzeugdatensensor (14) zur Detektion eines eingelegten Ganges und/oder einer Geschwindigkeit des Fahrzeuges aufweist.

6. Außenspiegelersatzsystem (100) nach einem der Ansprüche 1 bis 5, **dadurch gekennzeichnet, dass** das Außenspiegelersatzsystem (100) einen Beschleunigungssensor (16) aufweist.

7. Außenspiegelersatzsystem (100) nach einem der Ansprüche 1 bis 6, **dadurch gekennzeichnet, dass** das Außenspiegelersatzsystem (100) einen Helligkeitssensor (13) zur Detektion eines Helligkeitsgrades außerhalb des Fahrzeuges aufweist.

8. Außenspiegelersatzsystem (100) nach einem der Ansprüche 1 bis 7, **dadurch gekennzeichnet, dass** zur Regelung der Helligkeit ein Helligkeitsgrad, ein Kontrastgrad, ein Farbtiefengrad und/oder ein Farbsättigungsgrad des auf der Anzeigeeinrichtung (11) angezeigten Bildes einstellbar ist.

9. Außenspiegelersatzsystem (100) nach einem der Ansprüche 1 bis 8, **dadurch gekennzeichnet, dass** die Helligkeit des auf der Anzeigeeinrichtung (11) angezeigten Bildes derart geregelt ist, dass bei einer auf eine Rückwärtsfahrbewegung folgende Vorwärtsfahrbewegung des Fahrzeuges die Helligkeit des auf der Anzeigeeinrichtung (11) dargestellten Bildes zeitverzögert reduzierbar ist.

10. Außenspiegelersatzsystem (100) nach einem der Ansprüche 1 bis 9, **dadurch gekennzeichnet, dass** die Helligkeit des auf der Anzeigeeinrichtung (11) dargestellten Bildes in Form einer Hysteresis regelbar ist.

11. Außenspiegelersatzsystem (100) nach einem der Ansprüche 1 bis 10, **dadurch gekennzeichnet, dass** die Helligkeit des auf der Anzeigeeinrichtung (11) dargestellten Bildes derart regelbar ist, dass in einem oder mehreren Teilbereichen der Anzeigeeinrichtung (11) die Helligkeit unterschiedlich hoch einstellbar ist.

12. Fahrzeug mit einem Außenspiegelersatzsystem (100), welches nach einem der Ansprüche 1 bis 11 ausgebildet ist.

## Claims

1. Exterior mirror replacement system (100) for a vehicle, comprising at least one camera (10) and comprising at least one display device (11) that is arranged in an interior space of the vehicle, is connected to the camera (10) and displays an image recorded by the camera (10), wherein the brightness of the image displayed on the display device (11) is regulated in dependence on the direction of travel of the vehicle such that, if the vehicle reverses, the image displayed on the display device (11) is represented with a greater brightness than during a forward movement of the vehicle,
**characterized in that**
the exterior mirror replacement system (100) has an environment capturing sensor (15) for detecting an object located outside the vehicle, wherein the detected object is displayable in a highlighted manner on the display device (11).

2. Exterior mirror replacement system (100) for a vehicle, comprising at least one camera (10) and comprising at least one display device (11) that is arranged in an interior space of the vehicle, is connected to the camera (10) and displays an image recorded by the camera (10),
**characterized in that**
the brightness of the image displayed on the display device (11) is regulated in dependence on a speed limit of the vehicle such that, if the speed of the vehicle falls below this speed limit, the image displayed on the display device (11) is represented with a greater brightness than if the speed limit is exceeded, wherein the exterior mirror replacement system (100) has an environment capturing sensor (15) for detecting an object located outside the vehicle, wherein the detected object is displayable in a highlighted manner on the display device (11).

3. Exterior mirror replacement system (100) according to Claim 1 or 2, **characterized in that**, for regulating the brightness of the image displayed on the display device (11), a change in the settings of the display device (11) and/or a change of the image properties of the image displayed on the display device (11) is/are settable.

4. Exterior mirror replacement system (100) according to one of Claims 1 to 3, **characterized in that**, for regulating the brightness of the image displayed on the display device (11), at least one control unit (12) is connected between the at least one camera (10) and the at least one display device (11).

5. Exterior mirror replacement system (100) according to one of Claims 1 to 4, **characterized in that** the exterior mirror replacement system (100) has a vehicle data sensor (14) for detecting a selected gear and/or a speed of the vehicle.

6. Exterior mirror replacement system (100) according to one of Claims 1 to 5, **characterized in that** the exterior mirror replacement system (100) has an acceleration sensor (16).

7. Exterior mirror replacement system (100) according to one of Claims 1 to 6, **characterized in that** the exterior mirror replacement system (100) has a brightness sensor (13) for detecting a brightness level outside the vehicle.

8. Exterior mirror replacement system (100) according to one of Claims 1 to 7, **characterized in that**, for regulating the brightness, a brightness level, a contrast level, a colour depth level and/or a colour saturation level of the image displayed on the display device (11) is/are settable.

9. Exterior mirror replacement system (100) according to one of Claims 1 to 8, **characterized in that** the brightness of the image displayed on the display device (11) is regulated such that, for a forward movement of the vehicle that follows a reverse movement, the brightness of the image represented on the display device (11) is reducible with a time delay.

10. Exterior mirror replacement system (100) according to one of Claims 1 to 9, **characterized in that** the brightness of the image represented on the display device (11) is regulatable in the form of a hysteresis.

11. Exterior mirror replacement system (100) according to one of Claims 1 to 10, **characterized in that** the brightness of the image represented on the display device (11) is regulatable such that the brightness in one or more partial regions of the display device (11) is settable at different levels.

12. Vehicle having an exterior mirror replacement system (100) configured according to one of Claims 1 to 11.

## Revendications

1. Système de remplacement de rétroviseur extérieur (100) pour un véhicule, comprenant au moins une caméra (10) et au moins un dispositif d'affichage (11) disposé dans un espace intérieur du véhicule, lequel est relié avec la caméra (10) et affiche une image capturée par la caméra (10), la luminosité de l'image affichée sur le dispositif d'affichage (11) étant régulée en fonction du sens de déplacement du véhicule de telle sorte que lors d'un mouvement en marche arrière du véhicule, l'image affichée sur le dispositif d'affichage (11) est représentée avec une luminosité plus élevée que dans le cas d'un mouvement en marche avant du véhicule,
**caractérisé en ce que**
le système de remplacement de rétroviseur extérieur (100) possède un capteur de détection d'environnement (15) destiné à détecter un objet qui se trouve en-dehors du véhicule, l'objet détecté pouvant être affiché en étant mis en valeur sur le dispositif d'affichage (11).

2. Système de remplacement de rétroviseur extérieur (100) pour un véhicule, comprenant au moins une caméra (10) et au moins un dispositif d'affichage (11) disposé dans un espace intérieur du véhicule, lequel est relié avec la caméra (10) et affiche une image capturée par la caméra (10),
**caractérisé en ce que**
la luminosité de l'image affichée sur le dispositif d'affichage (11) est régulée en fonction d'une vitesse limite du véhicule de telle sorte que dans le cas d'un franchissement vers le bas de la vitesse limite du véhicule, l'image affichée sur le dispositif d'affichage (11) est représentée avec une luminosité plus élevée que dans le cas d'un franchissement vers le haut de la vitesse limite, le système de remplacement de rétroviseur extérieur (100) possédant un capteur de détection d'environnement (15) destiné à détecter un objet qui se trouve en-dehors du véhicule, l'objet détecté pouvant être affiché en étant mis en valeur sur le dispositif d'affichage (11).

3. Système de remplacement de rétroviseur extérieur (100) selon la revendication 1 ou 2, **caractérisé en ce qu'**une modification des réglages du dispositif d'affichage (11) et/ou une modification des propriétés d'image de l'image affichée sur le dispositif d'affichage (11) peuvent être réglées en vue de réguler la luminosité de l'image affichée sur le dispositif d'affichage (11).

4. Système de remplacement de rétroviseur extérieur (100) selon l'une des revendications 1 à 3, **caractérisé en ce qu'**au moins une unité de commande (12) est interconnectée entre l'au moins une caméra (10) et l'au moins un dispositif d'affichage (11) en vue de réguler la luminosité de l'image affichée sur le dispositif d'affichage (11).

5. Système de remplacement de rétroviseur extérieur (100) selon l'une des revendications 1 à 4, **caractérisé en ce que** le système de remplacement de rétroviseur extérieur (100) possède un capteur de données de véhicule (14) destiné à la détection d'un rapport engagé et/ou d'une vitesse du véhicule.

6. Système de remplacement de rétroviseur extérieur (100) selon l'une des revendications 1 à 5, **caractérisé en ce que** le système de remplacement de rétroviseur extérieur (100) possède un capteur d'accélération (16).

7. Système de remplacement de rétroviseur extérieur (100) selon l'une des revendications 1 à 6, **caractérisé en ce que** le système de remplacement de rétroviseur extérieur (100) possède un capteur de luminosité (13) destiné à la détection d'un degré de luminosité à l'extérieur du véhicule.

8. Système de remplacement de rétroviseur extérieur (100) selon l'une des revendications 1 à 7, **caractérisé en ce qu'**un degré de luminosité, un degré de contraste, un degré de profondeur des couleurs et/ou un degré de saturation des couleurs de l'image affichée sur le dispositif d'affichage (11) peuvent être réglés en vue de réguler la luminosité.

9. Système de remplacement de rétroviseur extérieur (100) selon l'une des revendications 1 à 8, **caractérisé en ce que** la luminosité de l'image affichée sur le dispositif d'affichage (11) est régulée de telle sorte que dans le cas d'un mouvement en marche avant du véhicule qui suit un mouvement en marche arrière, la luminosité de l'image affichée sur le dispositif d'affichage (11) peut être réduite de manière temporisée.

10. Système de remplacement de rétroviseur extérieur (100) selon l'une des revendications 1 à 9, **caractérisé en ce que** la luminosité de l'image affichée sur le dispositif d'affichage (11) peut être régulée sous la forme d'une hystérésis.

11. Système de remplacement de rétroviseur extérieur (100) selon l'une des revendications 1 à 10, **caractérisé en ce que** la luminosité de l'image affichée sur le dispositif d'affichage (11) peut être régulée de telle sorte que la luminosité peut être réglée à des niveaux différents dans une ou plusieurs zones partielles du dispositif d'affichage (11).

12. Véhicule équipé d'un système de remplacement de rétroviseur extérieur (100) qui est configuré selon l'une des revendications 1 à 11.
